# EUROPEAN PATENT SPECIFICATION

(11) **EP 1 415 832 B1**
(45) Date of publication and mention of the grant of the patent: **18.03.2009**
(21) Application number: 03024577.3
(22) Date of filing: 28.10.2003
(51) Int. Cl.: B60J 1/16, B60J 1/17

(54) **Supporting structure of a window glass of a vehicle**
Tragstruktur für eine Glasscheibe eines Kraftfahrzeugfensters
Structure de support pour vitre de véhicule

(30) Priority: 31.10.2002 JP 2002318224
(43) Date of publication of application: 06.05.2004
(73) Proprietor: HONDA MOTOR CO., LTD., Tokyo (JP)
(72) Inventor: Omori, Toshihisa, Wako-shi Saitama (JP)
(74) Representative: Rupp, Christian

(56) References cited:
- EP-A- 0 255 811
- EP-A- 0 865 953
- DE-A- 4 203 364
- FR-A- 2 681 819
- FR-A- 2 739 060
- US-A- 4 903 436
- US-A- 4 964 238

## Description

### BACKGROUND OF THE INVENTION

### 1. FIELD OF THE INVENTION

The present invention relates to a supporting structure of a window glass of a vehicle. Preferably, the present invention relates to a supporting structure of a window glass of a vehicle that utilizes window runners, which are fixed to the window glass and engage with a guide rail so that the sliding movement of the window glass along a guide rail is allowed.

### 2. DESCRIPTION OF RELEVANT ART

Conventionally, various types of operation methods of a window glass of a vehicle that enables the window glass to move smoothly in the open-and-shut directions of a window of a vehicle, has been known. As an example of these types of operation methods, the method, in which the rise-and-lower of the window glass of a vehicle is performed by utilizing a channel so that the window glass moves along the channel, can be cited.

In this method, a window track, which is a U-like shaped member in sectional viewing, is used as the channel. This window track is equipped with a glass run channel made of rubber. Thus, the window glass slides along the glass run channel when the rise-and-lower of the window glass is performed.

In the conventional channel adopting the glass run channel made of rubber, the sliding movement of the window glass may be disturbed due to a deformation of a rubber, a friction between the window glass and the glass run channel, or a manufacturing error.

In the conventional channel adopting the glass run channel made of rubber, additionally, since the provision of the glass run channel is clearly visible from an outside of a vehicle, the appearance (design) of the vehicle may be spoiled. Furthermore, since a rubber is relatively expensive, the adoption of a rubber as a glass run channel may require excess manufacturing cost.

Under these kinds of environments, the apparatus disclosed in Japanese unexamined patent publication S58-16421 has been discovered. In this apparatus, the sliding movement of the window glass is performed while moving a joint, which is screwed to a window glass, in the channel.

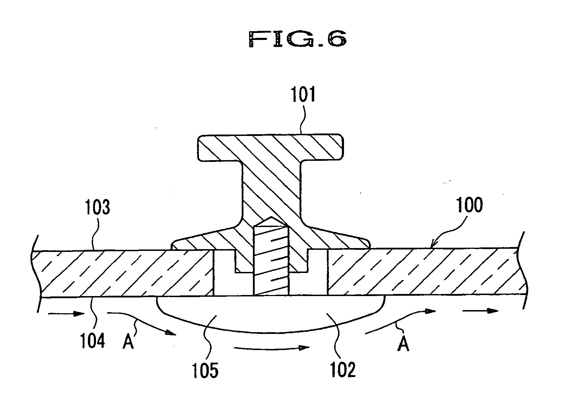

FIG. 6 is an enlarged view showing the condition that the joint 101 is fixed to the window glass 100 by screw 102.

As shown in FIG. 6, the joint 101 is provided on the vehicle's cabin side surface 103 of the window glass 100. This joint 101 and the window glass 100 are firmly connected by the screw 102, which is screwed to the window glass 100 from the outside surface 104. Here, a head 105 of the screw 102 is exposed to the outside surface 104 and protrudes from the outside surface 104 of the window glass 100.

In the conventional apparatus disclosed in Japanese unexamined patent publication S58-16621, since the head 105 of the screw 102 is exposed on the outside surface 104 of the window glass 100, a wind-roar due to the head 105 of the screw 102 has arised. In other words, since air flow (shown by arrow A) is disturbed by the head 105 of the screw 102 and turbulence is caused, this causes a wind-roar and noise.

In the conventional apparatus, additionally, the head 105 of the screw 102 is visible from an outside of the vehicle. Thus, the appearance of a vehicle becomes unattractive.

Therefore, there has been required a supporting structure of a window glass of a vehicle, that does not cause a wind-roar, and that improves the appearance of the vehicle by making the outside surface of the window glass flush with the vehicle body.

A typical supporting structure of this type is also disclosed in EP 0 255 811-A1, and also in US 4,964,238 A1.

FR 2 739 060 A1 shows a window support structure with a U-shaped member attached to the window.

FR 2 681 819 A1 shows a window support structure at the periphery of the window.

Thus it is object of the present invention to amend a supporting structure of the above-discussed type such that a wind-roar is not caused and the appearance of the vehicle is improves.

This object is achieved with the features of the independent claim.

Additional features are set forth in the dependent claims.

Thus, the present invention relates to a supporting structure of a window glass of a vehicle. This supporting structure includes a window runner and a C-shaped guide rail. The window runner has a junction and an engagement part. The window runner is fixed to the window glass from the vehicle's cabin side through the junction, and is engaged with the guide rail provided on the vehicle through the engagement part. Thus, the window glass adopting this supporting structure is transferred in order to shut or open the window of the vehicle.

According to the present invention, since the window runner is provided at the vehicle's cabin side surface of the window glass and the outside surface of the window glass is flush with the outside surface of the vehicle, the wind-roar due to the protrusion is never caused. Additionally, since the window runner is not exposed to a wind and rain, the considerable endurance of the window runner can be obtained.

In this supporting structure of a window glass of a vehicle, it is preferable that an area (length) in the ups-and-downs directions of the junction is larger than an area (length) in the fore-and-rear directions of the junction. In this case, since the area in the ups-and-downs directions of the junction is large, the adhesive force between the junction and the window glass exceeds the momentum force, which is applied in the up-and-down directions with respect to the window glass when the window glass is transferred. Thereby, the window runner is not detached from the window glass, and the smooth slide of the window glass can be obtained.

In this supporting structure of a window glass of a vehicle, the junction of the window runner is sandwiched between the first window piece and the second window piece, when the window glass is composed of a first window piece, which is placed in an external side of the vehicle, and a second window piece, which is placed in a vehicle's cabin side.

In this case, since the junction is sandwiched between the first window piece and the second window piece, the outside surface of the window glass is flush with the outside surface of the vehicle. Thus, the wind-roar due to the protrusion is never caused and the appearance (design) of the vehicle never be spoiled.

### BRIEF DESCRIPTION OF THE DRAWINGS

FIG. 1 is an explanatory side view of a vehicle wherein window runners, which are one of components of a supporting structure of a window glass, are indicated.
FIG. 2 is an exploded perspective view looking at substantial components of a door from a vehicle cabin side, wherein an inner panel is omitted.
FIG. 3 is an enlarged sectional view along a line of Y-Y in FIG. 2.
FIG. 4 is an enlarged sectional view along a line of X-X in FIG. 2.
FIG. 5 is an explanatory view showing substantial components of a supporting structure of the window glass for a vehicle according to the second embodiment.
FIG. 6 is an enlarged view showing the condition that the joint is fixed to the window glass by screw.

### DETAILED DESCRIPTION OF THE PREFERRED EMBODIMENT

The preferred embodiments of the present invention will be explained with reference to the attached drawings.

In the following explanation, the term "fore" means that it is a front side direction with respect to a vehicle, and the term "rear" means that it is a rear side direction with respect to the vehicle.

### FIRST EMBODIMENT

Firstly, a supporting structure of a window glass according to the first embodiment of the present invention will be explained. In the present embodiment, specifically, the supporting structure of a window glass, which is provided on a front door of a vehicle, will be explained as an example.

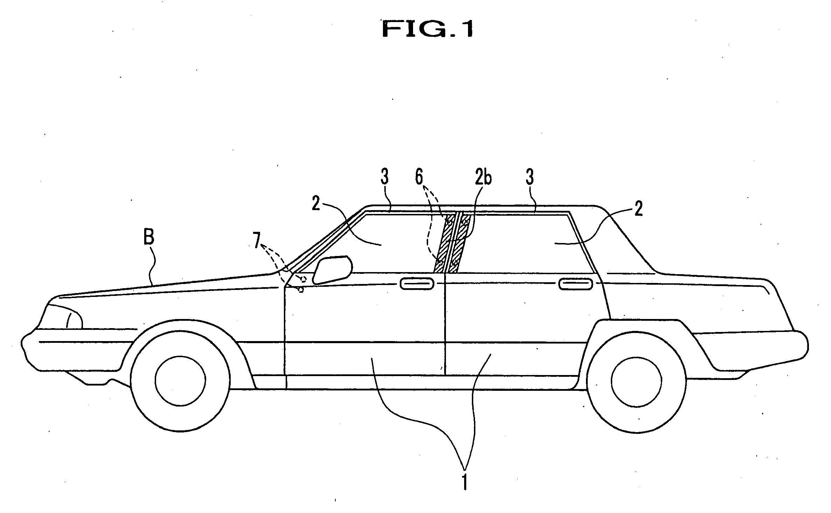

FIG. 1 is an explanatory side view of a vehicle wherein window runners, which are one of components of a supporting structure of a window glass, are indicated.

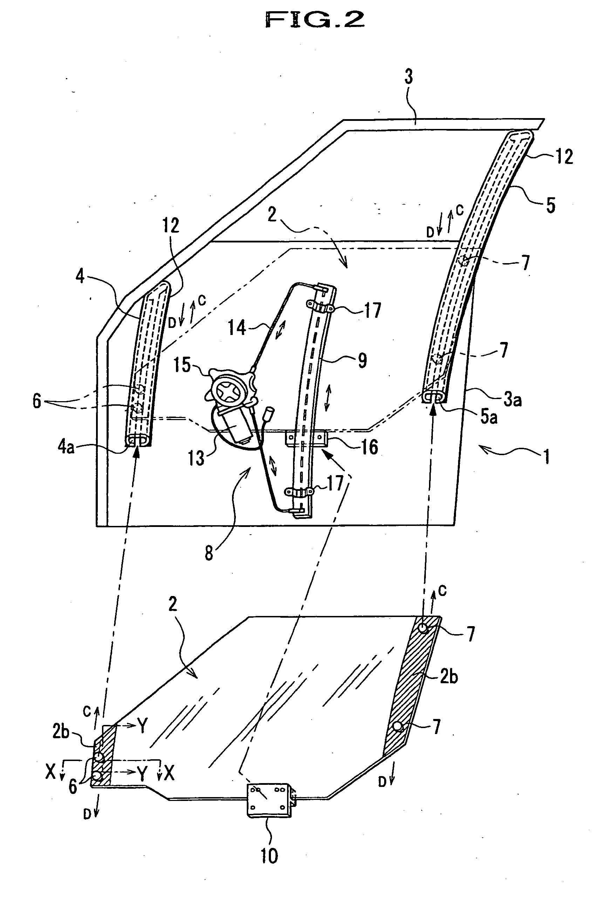

FIG. 2 is an exploded perspective view looking at substantial components of a door from a vehicle's cabin side, wherein an inner panel is omitted.

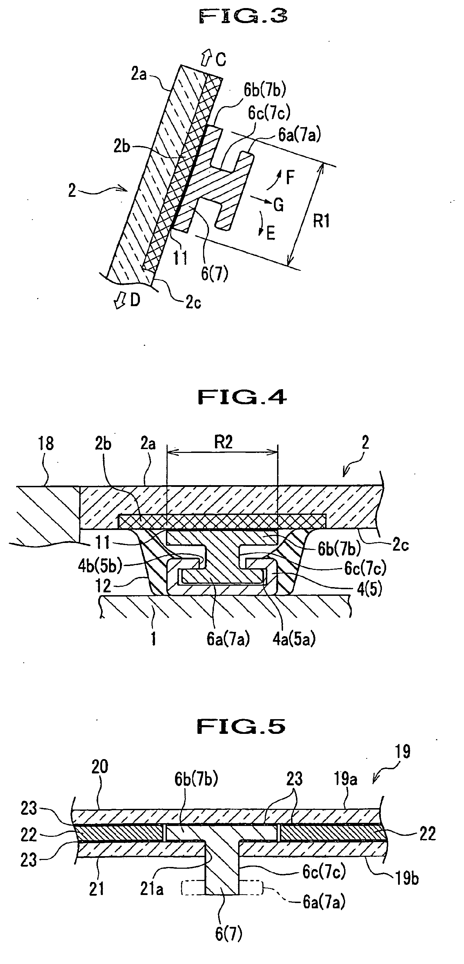

FIG. 3 is an enlarged sectional view along a line of Y-Y in FIG. 2. FIG. 4 is an enlarged sectional view along a line of X-X in FIG. 2.

As shown in FIG. 2, the door 1 is mainly composed of an outer panel 3a, an inner panel (not shown), and a door sash 3.

The outer panel 3a is placed at the outer side of the door components, and the inner panel is placed at the vehicle's cabin side of the door components. The space (an interior space) is provided between the outer panel 3a and the inner panel, and stores a regulator 8, guide rails 4 and 7, and a beam (not shown) which reinforces the rigidity of the door 1. Here, the regulator 8 is a device that controls the ups-and-downs (open and shut) movements of the window glass 2. Additionally, the interior space between the outer panel 3a and the inner panel is used for storing the window glass 2 when the window glass is lowered (opened). In this FIG. 2, the inner panel is omitted so that the arrangements of the regulator 8 and guide rails 4 and 7, which are provided within the interior space, can be realized.

As shown in FIG. 1, the door 1 has a door sash 3 which prevents a window glass 2 from falling away from the door 1. This falling away of the window glass 2 from the door 1 occurs when the negative pressure resulting from the flow of the wind during a travel of a vehicle is caused. The door sash 3 is provided on the inner panel and the outer panel 3a so as to support the edge of the window glass 2.

A laminated glass having an intermediate layer, such as a colored film, between window pieces and a tempered glass are used as the window glass 2.

As shown in FIG. 4, the outside surface 2a of the window glass 2 is being flush with an outside surface of a vehicle body 18. Here, the outside surface of the vehicle body 18 means that the surface of the vehicle body 18 in the case of a hard-top vehicle. The outside surface of the vehicle body 18 means that the surface of the door 1 in the case of a vehicle other than a hard-top vehicle.

As shown in FIG. 2 through FIG. 4, the window glass 2 has window runners 6 in the vicinity of the fore-side end of the window glass 2, and has window runners 7 in the vicinity of the rear-side end of the window glass. Each of the window runners 6 and 7 is a bobbin like-shaped member and is fixed to the window glass 2 by a bonding agent 11.

As can be seen in FIG. 2, each of the window runners 6 are lined up along the moving direction (up-and-down directions) of the window glass 2, and each of the window runners 7 are lined up along the moving direction (up-and-down directions) of the window glass 2.

To be more precise, each of the window runners 6 and 7 is an H-like shaped member in sectional viewing. Hereinafter, the explanation about the window runner 6 and the window runner 7 will be carried out simultaneously.

As shown in FIG. 3, the window runner 6 (7) is composed of an engagement part 6a (7a) , a junction 6b (7b) , and a shaft part 6c (7c).

The engagement part 6a (7a) fits into a hollow part 4a (5a) of the guide rail 4 (5) so that the window runner 6 (7) is allowed to slide along the guide rail 4 (5) (see FIG. 4). The junction 6b (7b) is bonded to an inner surface 2c (vehicle's cabin side surface) of the window glass 2 by the bonding agent 11. The shaft part 6c (7c) is provided between the engagement part 6a (7a) and the junction 6b (7b) , and positions in a groove 4b (5b) of the guide rail 4 (5).

As shown in FIG. 3, the sharp edge of the engagement part 6a (7a) is removed for reducing a frictional resistance between the engagement part 6a (7a) and the hollow part 4a (5a) of the guide rail 4 (5).

In the present invention, the up-and-down direction's length (R1) of the junction 6b (7b) is longer than the fore-and-rear direction's length (R2) of the junction 6b (7b). In other words, the length (R1) along the sliding (transfer) directions of the window glass 2 of the junction 6b (7b) is longer than the length (R2) vertical to the sliding (transfer) direction of the window glass 2 of the junction 6b (7b).

This is because the junction's adhesive strength against a sharing force, which is applied in the ups-and-downs direction when the window glass 2 is moved in the ups-and-downs direction, becomes stronger.

In the present invention, to be more precise, since the area in the up-and-down directions of the junction 6b (7b) is large, the adhesive force between the junction 6b (7b) and the window glass 2 exceeds the momentum force, which is applied in the ups-and-downs direction (shown by arrows E and F), and the tensile force, which is applied in the direction shown by a arrow G. Thus, the window runner 6 (7) is not detached from the window glass 2 when the window glass 2 is moved in the ups-and-downs directions and excess momentum force is applied to the junction 6b (7b).

As can be seen from FIG. 4, the shaft part 6c (7c) of the window runner 6 (7) is placed in the groove 4b (5b), and the shaft part 6c (7c) is moved in the up-and-down directions along the groove 4b (5b), when the window glass 2 is moved in order to open or shut the window.

As shown in FIG. 2 and FIG. 4, the window glass 2 has a blind part 2b so that each of the window runners 6 and 7 being provided on the window glass 2 is hidden by the blind part 2b. In the present embodiment, therefore, each of the window runners 6 and 7 are invisible from an outside of the vehicle. Here, since the window glass has the window runners 6 at the fore-side thereof and the window runners 7 at the rear-side thereof, a total of two blind parts 2b are provided on the window glass 2.

The blind part 2b is obtained by applying a ceramic processing on the transparent window glass, or by laminating an opaque colored film, such as a black film on the window glass 2. Here, if a laminated glass is adopted as a window glass 2, this blind part 2b may be obtained by providing a colored film between window pieces of the laminated glass.

A connector 10, which is connected to a carrier plate 16 of the regulator 8 that controls the up-and-down movement of the window glass 2, is fixed to the bottom in the middle part of the window glass 2 by a bolt (not shown).

The guide rails 4 and 5 are engaged with the window runners 6 and 7, respectively, and allow the window glass 2 to move along the guide rails 4 and 5. Hereinafter, the explanation about the guide rail 4 and the guide rail 5 will be carried out simultaneously.

The guide rail 4 (5) is a C-shaped long member in sectional viewing, and has a hollow part 4a (5a) to be fitted with the engagement part 6a (7a) of the window runner 6 (7) , and a groove 4b (5b) for holding the shaft part 6c (7c) of the window runner 6 (7).

In the present invention, the guide rail 4 (5) is arranged so that the longitudinal direction of the guide rail 4 (5) is placed along the up-and-down directions of the door 1 in the condition that the groove 4b (5b) of the guide rail 4 (5) faces the window glass 2.

As shown in FIG. 2, the guide rail 4 is disposed in the vicinity of the fore-side end of the door 1 and the guide rail 5 is disposed in the vicinity of the rear-side end of the door 1. The guide rail 4 (5) is fixed to the door sash 3 and the door 1 by welding for allowing the window glass 2 to move in the up-and-down directions smoothly and for supporting the window glass 2 with accuracy. In the present embodiment, at least top part and bottom part of these guide rails 4 and 5 are fixed to the door 1 by welding.

The guide rail 4 supports the fore-side of the window glass 2, so that the slide of the window runner 6 along the groove 4b is allowed, when the window glass 2 is moved in the up-and-down directions. The upper end of the guide rail 4 is fixed to the door sash 3 by welding, and the lower end of the guide rail 4 is fixed to the inner panel or a beam (not shown) disposed in the interior space of the door 1.

The guide rail 5 supports the rear-side of the window glass 2, so that the slide of the window runner 7 along the groove 5b is allowed, when the window glass 2 is moved in the up-and-down directions. The guide rail 5 is provided in parallel to the guide rail 4, and is disposed along the moving (transfer) directions of the window glass 2 at the rear side of the window glass 2.

The cross-sectional shape of the guide rail 4 is the same shape as that of the guide rail 5. These guide rails 4 and 5 are made of same metallic materials

In the present embodiment, the longitudinal length of the guide rails 4 and 5 are determined based on the shape of the window glass 2 and the shape of the door sash 3. Thus, the longitudinal length of the guide rail 4 differs from that of the guide rail 5.

As shown in FIG. 4, each of the guide rails 4 and 5 is provided with sealing material 12. This sealing material 12 comes in contact with the inner surface 2c of the window glass 2, and prevent the intrusion of the foreign materials, such as dust, into the guide rail 4 (5). Thereby, the occurrence of the disturbance of the slide of the window runner 6 (7) due to the dust in the guide rail 4 (5) can be prevented.

The regulator 8 drives a motor 13 and controls the turn of a dram 15. Thereby, since a wire 14 is being wound around the dram 15, the motion of the wire 14 in the direction shown by arrow is allowed.

As shown in FIG. 2, the wire 14 is passed through the holes provided at both ends in the longitudinal directions of a guide plate 9, and connects with a carrier plate 16 positioned on the outer panel side with respect to the guide plate 9. Here, since the carrier plate 16 is screwed to the connector 10 of the window glass 2, the regulator 8 can control the up-and-down movements of the window glass 2 by moving the carrier plate 16, which is connected to the wire 14.

In the present invention, therefore, the guide plate 9 is provided at the middle in the width directions (fore-and-rear directions) of the door 1, so that the guide plate 9 is placed along the longitudinal directions of the guide rails 4 and 5. In other words, the guide plate 9. is provided so that the guide plate 9 is in parallel with the guide rails 4 and 5.

In the present embodiment, the guide plate 9 is fixed to the door 1 (the inner panel or the beam) through a bracket 17 using a screw. In the present embodiment, a regulator adopting a wire-drum is used as the regulator 8.

As shown in FIG. 2 and FIG. 3, the window runners 6 are lined up along the ups-and-downs directions (transfer directions) of the window glass 2 and the window runners 7 are lined up along the up-and-down directions (transfer directions) of the window glass 2. Thus, each of the window runners 6 (7) fits into the guide rail 4 (5) , respectively, when the window glass 2 is installed on a vehicle.

Next, the act of the supporting structure of a window glass of the vehicle according to the present embodiment will be explained.

When a switch (not shown) of an automatic window apparatus is operated so as to move the window glass 2 in the lower direction, the dram 15 is turned by the motor 13. In this occasion, the wire 14 is moved in the direction that allows the carrier plate 16 to move downwardly. Thus, the window glass 2 connected to the wire 14 through the carrier plate 16 is moved downwardly along the guide rails 4 and 5. In this occasion, since the engagement part 6a (7a) of the window runner 6 (7) slide along the hollow part 4a (5a) of the guide rail 4 (5), the window glass 2 is smoothly moved in the lower direction.

In the present embodiment, on the other hand, when the switch (not shown) of the automatic window apparatus is operated so as to move the window glass 2 in the upper direction, the dram 15 is turned by the motor 13. In this occasion, the wire 14 is moved in the direction that allows the carrier plate 16 (window glass 2) to move upwardly. Thus, the window glass 2 connected to the wire 14 through the carrier plate 16 is moved upwardly along the guide rails 4 and 5.

In the present embodiment, as described above, since nothing is protruding from the outside surface of the window glass 2, the outside surface of the window glass is flush with the outside surface of the vehicle. Thus, the wind-roar due to the protrusion is never caused.

In the present invention, additionally, the window runner 6 and 7 are provided within the vehicle cabin and are not exposed to a wind and rain. Thus, the considerable endurance of the window runner 6 and 7 can be obtained. In this case, since the bonding agent, which is suitable for use in the vehicle cabin's environment, can be adoptable, the bonding strength of the window runner 6 and 7 can be improved.

In the present embodiment, furthermore, since the window runners 6 and 7 are hidden by the blind part 2b, the appearance and the luxury texture of the vehicle are not defaced.

In the present embodiment, still further more, since the supporting structure of the present invention is composed of a small numbers of the parts and is small in size, the adoption of the supporting structure does not require the excess cost. Thus, various types of vehicle can adopt the present invention's guide rail by simply changing the longitudinal length of the guide rail in compliance with the size of the window glass.

### SECOND EMBODIMENT

Next, the supporting structure of a window glass according to the second embodiment of the present invention will be explained.

FIG. 5 is an explanatory view showing substantial components of a supporting structure of the window glass for a vehicle according to the present second embodiment.

In the present second embodiment, the laminated glass 19 composed of a first window piece 20 and a second window piece 21 is adopted instead of the window glass of the first embodiment. In this laminated glass 19, the junction 6b (7b) of the window runner 6 (7) is sandwiched between the first window piece 20 and the second window piece 21. Thereby, the window runner 6 (7) is firmly held by the laminated glass 19.

In this laminated glass 19, the first window piece 20 is positioned at the outer side of the vehicle, and the second window piece 21 is positioned at the vehicle's cabin side. Intermediate layers 22 made of synthetic resin material, such as an acrylic resin, are disposed between the first window piece 20 and the second window piece 21. In this laminated glass 19, the first window piece 20, the second window piece 21, and intermediate layers 22 are bonded by a bonding agent 23.

The window runner 6 (7) of the second embodiment is a bobbin like-shaped member and is made of thermosetting resin.

The junction 6b (7b) of the window runner 6 (7) is placed between the first window piece 20 and the second window piece 21. As can be seen from FIG. 5, an inner surface of the junction 6b (7b) of the window runner 6(7) is bonded to the second window piece 21 and an outside surface of the junction 6b (7b) of the window runner 6 (7) is bonded to the first window piece 20.

Here, since the junction 6b (7b) is firmly held between the first window piece 20 and the second window piece 21, the position of the window runner 6 (7) is not moved in the vertical directions with respect to the surface of the laminated glass 19. In other words, since the junction 6b (7b) is sandwiched between the first window piece 20 and the second window piece 21, the window runner 6 (7) is stably provided on the laminated glass 19. Thus, the window runner 6 (7) never cause a rattle sound when the window runner 6 (7) moves along the guide rail 4 (5).

The shaft part 6c (7c) goes through a through-hole 21a provided on the second window piece 21 and protrudes toward the vehicle's cabin side, when forming the laminated glass 19 from the first window piece 20 and the second window piece 21. Then, the tip of the shaft part 6c (7c) is treated with a heat treatment in order to form an engagement part 6a (7a).

In the present invention, as described above; the outside surface 19a of the laminated glass 19 is flush with the external surface of the vehicle. Thus, the wind-roar is never caused.

In the present invention, the window runner 6 (7) is not exposed to a wind and rain. Thus, the window runner 6 (7) with considerable endurance can be obtained.

In the present embodiment, the junction 6b (7b) of the window runner 6 (7) is sandwiched between the first window piece 20 and the second window piece 21 and is bonded to each of the first window piece 20 and the second window piece 21. Thus, the window runner 6 (7) is firmly fixed to the laminated glass 19 with sufficient bonding strength. Thereby, the occurrence of the crack of the laminated glass 19 can be prevented even if a stress caused by the slide of the laminated glass 19 is concentrated on the region around the junction 6b (7b) of the laminated glass 19.

Although there have been disclosed what are the present embodiments of the invention, it will be understood by person skilled in the art that variations and modifications may be made thereto without departing from the scope of the invention, which is indicated by the appended claims.

In the above described embodiment, the supporting structure that is used for a window glass of a front door of a vehicle has been explained as an example. But the supporting structure of the present invention can be adoptable as long as the supporting structure is used for supporting the window glass, which is used in order to open or shut the window by sliding the window glass. For example, the supporting structure of the present invention may be adoptable for a window glass of a rear door or a sunroof.

In the above described embodiment, additionally, the window glass, which is stored within the door component when the window is opened, has been explained as an example of the window glass. But, the window glass, which is stored within the vehicle body when the window is opened, can be adoptable.

In the above described embodiment, the supporting structure, which is used for a window glass of a door equipped with a door sash, has been explained. But the supporting structure of the present invention may be adoptable for a window glass of a hard-top door, which has no door sash. In this case, the sliding of the window glass is allowed by providing the guide rails within a door or to the vehicle body.

In the above described embodiment, the window runner is made of resin material. But the oleo-resin material can be adoptable instead of resin material. In this case, since the frictional resistance between the engagement part and the hollow part of the guide rails can be reduced, the smooth slide of the window runner along the guide rail can be brought out.

In the present embodiment, the window runner may be fixed to the window glass by utilizing various types of adhesion techniques, such as heat or ultrasonic welding technique.

In the present invention, a laminated glass may include a colored film layer between the first window piece and the intermediate layer in order to hide the window runner when the window glass is provided on the door of a vehicle. As an example of this colored film layer, a film made of poly vinyl butyral, which is a sturdy and flexible material, can be adoptable. In this case, the misalignment and the scattering of the window glass can be prevented even if the accidental demolition of the window glass occurs.

## Claims

1. A supporting structure of a window glass (2) of a vehicle, the supporting structure comprising:
a C-shaped guide rail (4, 5) which is provided along the transfer directions of the window glass (2), the guide rail being provided at the vehicles cabine side surface of the window glass (2) and
at least one window runner (6, 7) which is fixed to the window glass (2) and which operatively engages with the guide rail (4, 5), wherein
the window runner (6, 7) is fixed to the vehicle cabin's side surface of the window glass (2) such that it is not exposed to wind and rain, wherein
the window runner (6, 7) moves along the guide rail (4, 5) under fitting into the guide rail (4, 5), when the window glass (2) is transferred.

2. A supporting structure of a window glass of a vehicle according to claim 1, wherein the window runner (6, 7) is fixed such that it is hidden by a blind part (2b) of the window glass (2).

3. A supporting structure of a window glass of a vehicle according to claim 2, wherein the blind part (2b) is obtained by ceramic processing of the window glass (2) or by laminating an opaque coloured film, such as a black film, on the window glass (2).

4. A supporting structure of a window glass of a vehicle according to anyone of claims 1 to 3, wherein the window runner (6, 7) is bonded (11) to the window glass (2).

5. A supporting structure of a window glass of a vehicle according to anyone of claims 1 to 3, wherein the window runner (6, 7) is fixed to the window glass by means of adhesion techniques such as heat or ultrasonic welding technique.

6. A supporting structure of a window glass of a vehicle according to anyone of claims 1 to 5, wherein said window runner (6, 7) comprises
a junction (6b, 7b) to be fixed to the window glass (2); and an engagement part (6a, 7a) which is engaged with said guide rail (4, 5) provided at the vehicle's cabin side and is moved in the ups-and-downs direction of the window glass (2), wherein
the window runner (6, 7) is fixed to the vehicle's cabin side surface (2a) of the window glass (2) through the junction (6b, 7b).

7. A supporting structure of a window glass of a vehicle according to claim 1 or anyone of claims 1 to 6, wherein
the length in the ups-and-downs directions of the junction (6b, 7b) is larger than the length in the fore-and-rear directions of the junction (6b, 7b).

8. A supporting structure of a window glass of a vehicle according to anyone of claims 1 to 7; wherein
the window glass is composed of a first window piece (20), which is placed in an external side of the vehicle, and a second window piece (21), which is placed in a vehicle's cabin side, wherein
the junction (6b, 7b) of the window runner (6, 7) is sandwiched between the first window piece (20) and the second window piece (21), and one side surface of
the junction (6b, 7b) is bonded (23) to the first window piece (20), and the other side surface of the junction (6b,7b) is bonded (23) to the second window piece (21).

9. A supporting structure of a window glass of a vehicle according to anyone of claims 1 to 8, wherein a plurality of window runners (6, 7) are lined up along the transfer direction of the window glass.

10. A supporting structure of a window glass of a vehicle according to claim 9, wherein the window runner includes
at least one first window runner (6) which is placed on one side of the window glass (2), and
at least one second window runner (7) which is placed on other side of the window glass (2), and wherein the guide rail includes
a first guide rail (4) to be engaged with the first window runner (6), and
a second guide rail (5) to be engaged with the second window runner (7).

## Patentansprüche

1. Tragkonstruktion einer Fensterglasscheibe (2) eines Fahrzeugs, wobei die Tragkonstruktion umfasst:
eine C-förmige Führungsschiene (4, 5), welche entlang der Verstellrichtungen der Glasscheibe (2) vorgesehen ist, wobei die Führungsschiene an der fahrzeugkabinenseitigen Oberfläche der Glasscheibe (2) vorgesehen ist; und
zumindest einen Fensterläufer (6, 7), welcher an der Glasscheibe (2) fixiert ist, und welcher mit der Führungsschiene (4, 5) in Wirkeingriff steht, wobei
der Fensterläufer (6, 7) an der fahrzeugkabinenseitigen Oberfläche der Glasscheibe (2) fixiert ist, so dass er nicht Wind und Regen ausgesetzt ist, wobei
der Fensterläufer (6, 7) sich entlang der Führungsschiene (4, 5) unter Einfügen in die Führungsschiene (4, 5) bewegt, wenn die Glasscheibe (2) verstellt wird.

2. Tragkonstruktion einer Fensterglasscheibe eines Fahrzeugs gemäß Anspruch 1, wobei der Fensterläufer (6, 7) derartig fixiert ist, dass er durch ein Blindteil (2b) des Fensterglases (2) versteckt wird.

3. Tragkonstruktion einer Fensterglasscheibe eines Fahrzeugs gemäß Anspruch 2, wobei das Blindteil (2b) durch keramische Bearbeitung der Glasscheibe (2) oder durch Laminieren eines opaken farbigen Films, wie beispielsweise eines schwarzen Films, auf die Glasscheibe (2) erhalten wird.

4. Tragkonstruktion einer Fensterglasscheibe eines Fahrzeugs gemäß irgendeinem der Ansprüche 1 bis 3, wobei der Fensterläufer (6, 7) mit der Glasscheibe (2) verbunden (11) ist.

5. Tragkonstruktion einer Fensterglasscheibe eines Fahrzeugs gemäß irgendeinem der Ansprüche 1 bis 3, wobei der Fensterläufer (6, 7) an der Glasscheibe mittels einer Hafttechnik, wie beispielsweise Wärme- oder Ultraschall-Schweißtechnik, fixiert ist.

6. Tragkonstruktion einer Fensterglasscheibe eines Fahrzeugs gemäß irgendeinem der Ansprüche 1 bis 5, wobei der Fensterläufer (6, 7) umfasst
ein Verbindungsstück (6b, 7b), welches an der Glasscheibe (2) zu fixieren ist; und
ein Eingriffsteil (6a, 7a), welches mit der Führungsschiene (4, 5) in Eingriff steht, welche an der Fahrzeugkabinenseite vorgesehen ist, und welche in der aufwärts-und-abwärts Richtung der Glasscheibe (2) bewegt wird, wobei
der Fensterläufer (6, 7) an der fahrzeugkabinenseitigen Oberfläche (2a) der Glasscheibe (2) durch das Verbindungsstück (6b, 7b) fixiert ist.

7. Tragkonstruktion einer Fensterglasscheibe eines Fahrzeugs gemäß Anspruch 1 oder irgendeinem der Ansprüche 1 bis 6, wobei
die Länge des Verbindungsstücks (6b, 7b) in der aufwärts-und-abwärts Richtung größer ist als die Länge des Verbindungsstücks (6b, 7b) in der vorwärts-undrückwärts Richtung.

8. Tragkonstruktion einer Fensterglasscheibe eines Fahrzeugs gemäß irgendeinem der Ansprüche 1 bis 7; wobei
die Glasscheibe aus einem ersten Scheibenstück (20), welches an einer Außenseite des Fahrzeugs platziert ist, und einem zweiten Scheibenstück (21) zusammengesetzt ist, welches an einer Kabinenseite des Fahrzeugs platziert ist, wobei
das Verbindungsstück (6b, 7b) des Fensterläufers (6, 7) zwischen dem ersten Scheibenstück (20) und dem zweiten Scheibenstück (21) zwischengelegt ist, und eine Seitenfläche desVerbindungsstücks (6b, 7b) mit dem ersten Scheibenstück (20) verbunden ist, und die andere Seitenfläche des Verbindungsstücks (6b, 7b) mit dem zweiten Scheibenstück (21) verbunden ist.

9. Tragkonstruktion einer Fensterglasscheibe eines Fahrzeugs gemäß irgendeinem der Ansprüche 1 bis 8, wobei mehrere Fensterläufer (6, 7) entlang der Verstellrichtung der Glasscheibe aufgereiht sind.

10. Tragkonstruktion einer Fensterglasscheibe eines Fahrzeugs gemäß Anspruch 9, wobei der Fensterläufer enthält
zumindest einen ersten Fensterläufer (6), welcher auf einer Seite der Glasscheibe (2) platziert ist, und
zumindest einen zweiten Fensterläufer (7), welcher auf der anderen Seite der Glasscheibe (2) platziert ist, und wobei die Führungsschiene enthält
eine erste Führungsschiene (4), welche mit dem ersten Fensterläufer (6) in Eingriff zu bringen ist, und
eine zweite Führungsschiene (5), welche mit dem zweiten Fensterläufer (7) in Eingriff zu bringen ist.

## Revendications

1. Structure de support d'une vitre (2) de véhicule, la structure de support comprenant :
un rail de guidage en forme de C (4, 5) qui est prévu le long des directions de déplacement de la vitre (2), le rail de guidage étant prévu sur la surface de la vitre (2) située sur le côté cabine du véhicule, et
au moins une glissière de vitre (6, 7) qui est fixée sur la vitre (2) et qui vient en prise fonctionnellement avec le rail de guidage (4, 5),
dans laquelle
la glissière de vitre (6, 7) est fixée sur la surface de la vitre (2) située sur le côté cabine du véhicule de sorte qu'elle n'est pas exposée aux intempéries, dans laquelle
la glissière de vitre (6, 7) se déplace le long du rail de guidage (4, 5) en s'ajustant à l'intérieur du rail de guidage (4, 5) lors du déplacement de la vitre (2).

2. Structure de support d'une vitre de véhicule selon la revendication 1, dans laquelle la glissière de vitre (6, 7) est fixée de manière à être cachée par une partie aveugle (2b) de la vitre (2).

3. Structure de support d'une vitre de véhicule selon la revendication 2, dans laquelle la partie aveugle (2b) est obtenue par un traitement céramique de la vitre (2) ou par stratification d'un film coloré opaque, par exemple un film noir, sur la vitre (2).

4. Structure de support d'une vitre de véhicule selon l'une quelconque des revendications 1 à 3, dans laquelle la glissière de vitre (6, 7) est liée (11) à la vitre (2).

5. Structure de support d'une vitre de véhicule selon l'une quelconque des revendications 1 à 3, dans laquelle la glissière de vitre (6, 7) est fixée sur la vitre au moyen de techniques d'adhérence telles qu'une technique de thermosoudage ou de soudage par ultrasons.

6. Structure de support d'une vitre de véhicule selon l'une quelconque des revendications 1 à 5, dans laquelle ladite glissière de vitre (6, 7) comprend
un joint (6b, 7b) destiné à être fixé sur la vitre (2) ; et
une partie de mise en prise (6a, 7a) qui vient en prise avec ledit rail de guidage (4, 5) prévu sur le côté cabine du véhicule et se déplace dans la direction de montée et de descente de la vitre (2), dans laquelle
la glissière de vitre (6, 7) est fixée sur la surface (2a) de la vitre (2) située sur le côté cabine du véhicule par l'intermédiaire du joint (6b, 7b).

7. Structure de support d'une vitre de véhicule selon la revendication 1 ou l'une quelconque des revendications 1 à 6, dans laquelle
la longueur dans les directions de montée et de descente du joint (6b, 7b) est supérieure à la longueur dans les directions d'avancée et de recul du joint (6b, 7b).

8. Structure de support d'une vitre de véhicule selon l'une quelconque des revendications 1 à 7, dans laquelle :
- la vitre est composée d'un premier élément de vitre (20), qui est placé sur le côté extérieur du véhicule, et d'un second élément de vitre (21), qui est placé sur le côté cabine du véhicule, dans laquelle
- le joint (6b, 7b) de la glissière de vitre (6, 7) est pris en sandwich entre le premier élément de vitre (20) et le second élément de vitre (21), et une surface latérale du joint (6b, 7b) est liée (23) au premier élément de vitre (20), et l'autre surface latérale du joint (6b, 7b) est liée (23) au second élément de vitre (21).

9. Structure de support d'une vitre de véhicule selon l'une quelconque des revendications 1 à 8, dans laquelle une pluralité de glissières de vitre (6, 7) sont alignées le long de la direction de déplacement de la vitre.

10. Structure de support d'une vitre de véhicule selon la revendication 9, dans laquelle la glissière de vitre comprend
au moins une première glissière de vitre (6) qui est placée sur un côté de la vitre (2), et
au moins une seconde glissière de vitre (7) qui est placée sur l'autre côté de la vitre (2), et dans laquelle le rail de guidage comprend
un premier rail de guidage (4) destiné à venir en prise avec la première glissière de vitre (6), et
un second rail de guidage (5) destiné à venir en prise avec la seconde glissière de vitre (7).
